# EUROPÄISCHE PATENTSCHRIFT

(11) **EP 0 780 180 B1**
(45) Veröffentlichungstag und Bekanntmachung des Hinweises auf die Patenterteilung: **05.04.2000**
(21) Anmeldenummer: 96117525.4
(22) Anmeldetag: 31.10.1996
(51) Int. Cl.: B23B 31/26

(54) **Schnittstelle zwischen einem Werkzeugträger und einem Spannschaft einer Werkzeugmaschine**
Coupling between a tool-holder and the clamping shaft of a machine tool
Accouplement entre un porte-outil et la tige de serrage d'une machine outil

(30) Priorität: 23.12.1995 DE 19548711
(43) Veröffentlichungstag der Anmeldung: 25.06.1997
(73) Patentinhaber: Klement, Klaus-Dieter, 52428 Jülich (DE)
(72) Erfinder: Klement, Klaus-Dieter, 52428 Jülich (DE)
(74) Vertreter: Albrecht, Rainer Harald, Dr.-Ing.

(56) Entgegenhaltungen:
- EP-A- 0 219 594
- EP-A- 0 387 228
- EP-A- 0 391 262
- DE-A- 4 110 720
- US-A- 5 193 954

## Beschreibung

Die Erfindung betrifft eine Schnittstelle zwischen einem: Werkzeugträger und einem Spannschaft einer Werkzeugmaschine,
wobei der Werkzeugträger einen Anschlagbund zur Begrenzung des Spannweges sowie einen in eine stirnseitige Ausnehmung des Spannschaftes einsetzbaren Hohlschaft mit einem endseitigen, nach innen vorspringenden Kragen aufweist,
wobei der Spannschaft eine Spanneinrichtung mit einem Zugbolzen enthält, der einen in den Hohlschaft eingreifenden Kopf aufweist, und
wobei am Umfang des Zugbolzenz ein Sperrelement mit radial beweglichen Sperrsegmenten angeordnet ist, die an einer kegelstumpfförmigen Führungsfläche des Kopfes anliegen und bei einer Spannbewegung des Zugbolzens an der Führungsfläche entlang nach außen gleiten, wobei sie den Kragen des Hohlschaftes hinterfassen und diesen mit dem Zugbolzen verriegeln.

Bei dem Spannschaft mag es sich um eine hochtourige Spindel, beispielsweise einer Fräs- oder Bohrmaschine, oder um einen feststehenden Werkzeugträger, beispielsweise für eine Drehmaschine, handeln. Bei der aus DE 41 10 720 C2 bekannten Schnittstelle von der die Erfindung ausgeht, bestehen die Sperrsegmente aus Klemmleisten, die mit ihrem rückwärtigen Ende kippbeweglich in Aufnahmetaschen eingesetzt sind. Die Aufnahmetaschen für das rückwärtige Ende der Sperrsegmente werden von mit dem Spannschaft festverbundenen Ringscheiben sowie in Nuten des Zugbolzen eingesetzten Leisten begrenzt. Im Zuge der Spannbewegung des Zugbolzens führen die einzelnen Sperrsegmente Kippbewegungen aus, wobei sie sich einerseits am Spannschaft und andererseits am Kopf des Zugbolzens abstützen. Fertigungs- und Montagetoleranzen haben Einfluß auf die Kipp- bzw. Spreizbewegungen der einzelnen Segmente. Dies beeinträchtigt die Fangsicherheit, und es können Ungleichmäßigkeiten in bezug auf die Spannkraftverteilung am Werkzeugträgerumfang hervorgerufen werden. Bei hochtourigen Spindeln entstehen überdies störende Unwuchten. Infolge der Gestaltung und Anordnung der Sperrsegmente muß der Zugbolzen schließlich in beachtlicher Länge ausgeführt werden, wodurch die Steifigkeit der Schnittstelle leidet.

Der Erfindung liegt die Aufgabe zugrunde, eine Schnittstelle der eingangs beschriebenen Art so weiter zu entwickeln, daß bei kurzer Baulänge eine gleichmäßige Spannkraftverteilung am Umfang gewährleistet ist.

Zur Lösung dieser Aufgabe lehrt die Erfindung, daß eine in den Hohlschaft eingreifende Schiebehülse axial beweglich auf dem Zugbolzen angeordnet und mittels einer Druckfeder an einer innenseitigen Ringfläche des Spannschaftes abgestützt ist, wobei ein endseitiger Bund der Schiebehülse und der Kopf des Zugbolzens einen Ringraum begrenzen, in dem die Sperrsegmente radial beweglich angeordnet sind, und daß der Kopf des Zugbolzens eine an die kegelstumpfförmige Führungsfläche anschließende radiale Ringfläche aufweist, die am Ende des Spannweges mit einer radialen Anschlagfläche der Sperrsegmente zusammenwirkt. Das Sperrelement ist radial sowie axial frei beweglich in der von dem Hohlschaft zugeordneten vorderen stirnseitigen Ausnehmung des Spannschaftes positioniert. Die federnd gelagerte Schiebehülse gleicht Fertigungs- und Montagetoleranzen zwischen dem Zugbolzen und dem Spannschaft aus, so daß sämtliche Sperrsegmente im Zuge der Spannbewegung des Zugbolzens gleiche Radialbewegungen ausführen, identisch ist. Es resultiert eine hohe Fangsicherheit und eine gleichmäßige Spannkraftverteilung am Umfang des Hohlschaftes. Schließlich ermöglicht die erfindungsgemäße Lehre eine kurze Baulänge des Zugbolzens.

Für die weitere Ausgestaltung der erfindungsgemäßen Schnittstelle bestehen verschiedene Möglichkeiten. Eine erste Ausführungsform ist dadurch gekennzeichnet, daß das Sperrelement aus radial beweglichen Ringsegmenten besteht, die ausschließlich in dem Ringraum geführt sind und lediglich am Umfang durch einen elastischen Ring verbunden sind. Schmale Ringsegmente sind einsetzbar, so daß die Schnittstelle mit einer sehr kurzen Baulänge ausgeführt werden kann. Die Ausführung eignet sich insbesondere für feststehende Werkzeugträger an beispielsweise einer Drehmaschine.

Gemäß einer alternativen Ausführung der erfindungsgemäßen Lehre besteht das Sperrelement aus einer einstückigen Metallhülse, die einen geschlossenen rückseitigen Ring, einen daran anschließenden dünnwandigen Mantelabschnitt' mit stegbildenden Durchbrüchen und an die Stege des Mantelabschnitts angeformte Sperrsegmente aufweist, wobei der dünnwandige Mantelabschnitt auf dem Kopf des Zugbolzens verschiebbar angeordnet ist und die Sperrsegmente in die von dem Kopf des Zugbolzens und den Bund der Schiebehülse gebildeten Ringraum einfassen. Vorzugsweise bilden die Sperrsegmente eine von schmalen Einschnitten durchbrochene Ringwulst. Die Metallhülse kann als einstückiges Präzisionsteil kostengünstig gefertigt werden, welches auch bei hohen Drehzahlen keine Unwuchten erzeugt. Die Ausgestaltung eignet sich insbesondere für hochtourige Spindeln. In weiterer Ausgestaltung lehrt die Erfindung, daß die Ringwulst hülseninnenseitig einen dem Kopf des Zugbolzens zugeordneten Innenbund und eine daran anschließende kegelförmige Ringfläche aufweist und daß die außenseitige Stirnfläche der Ringwulst eine dem Kragen des Hohlschaftes zugeordnete Fase besitzt. Die Ausführung ermöglicht eine hohe Fangsicherheit und eine gute Kraftübertragung zwischen dem Zugbolzen und dem Hohlschaft. Die Metallhülse ist mit ihrem dünnwandigen Mantelabschnitt annähernd spielfrei auf dem Kopf des Zugbolzens führbar, wobei die Stege als federelastische Teile ausreichende Rückstellkräfte auf die Sperrsegmente ausüben. Zur Verbesserung der Formsteifigkeit empfiehlt es sich, den rückseitigen Ring mit einem Verstärkungsrand auszubilden.

Vorzugsweise besteht die kegelstumpfförmige Führungsfläche des Zugbolzenkopfes aus einer ersten Ringfläche mit großem Kegelwinkel und einer zweiten Ringfläche mit kleinerem Kegelwinkel, wobei die erste Ringfläche an den die Schiebehülse führenden Zylinderabschnitt des Zugbolzens und die zweite Ringfläche an die radiale Ringfläche des Kopfes angrenzt.

Im folgenden wird die Erfindung anhand einer lediglich ein Ausführungsbeispiel darstellenden Zeichnung ausführlich erläutert. Es zeigen schematisch
- Fig. 1: den Längsschnitt durch eine Spanneinheit mit einer Schnittstelle zwischen einem Werkzeugträger und einem Spannschaft einer Werkzeugmaschine,
- Fig. 2: eine andere Ausführung der Schnittstelle, ebenfalls im Längsschnitt,
- Fig. 3: das Sperrelement der in Fig. 2 dargestellten Schnittstelle in perspektivischer Darstellung.

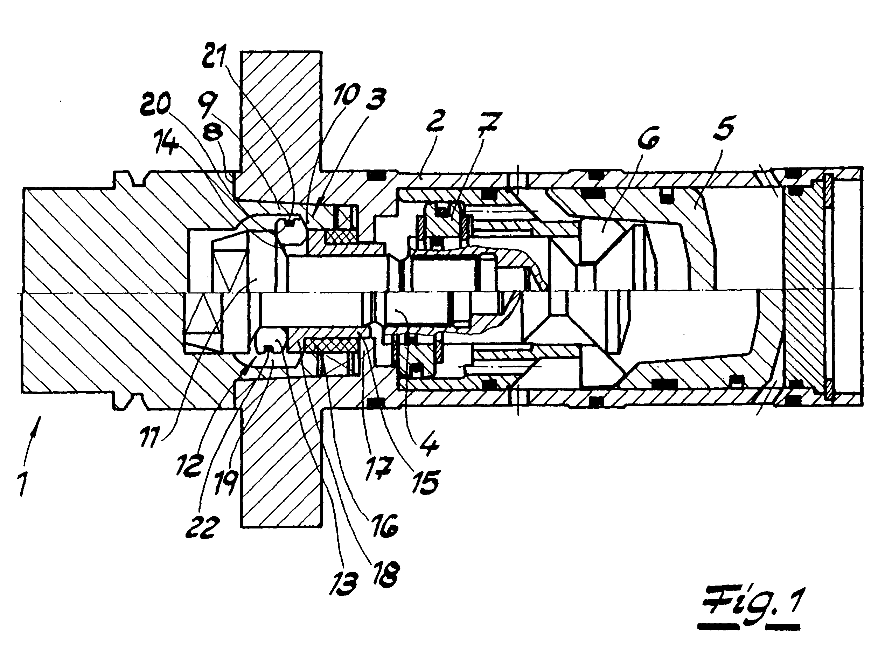

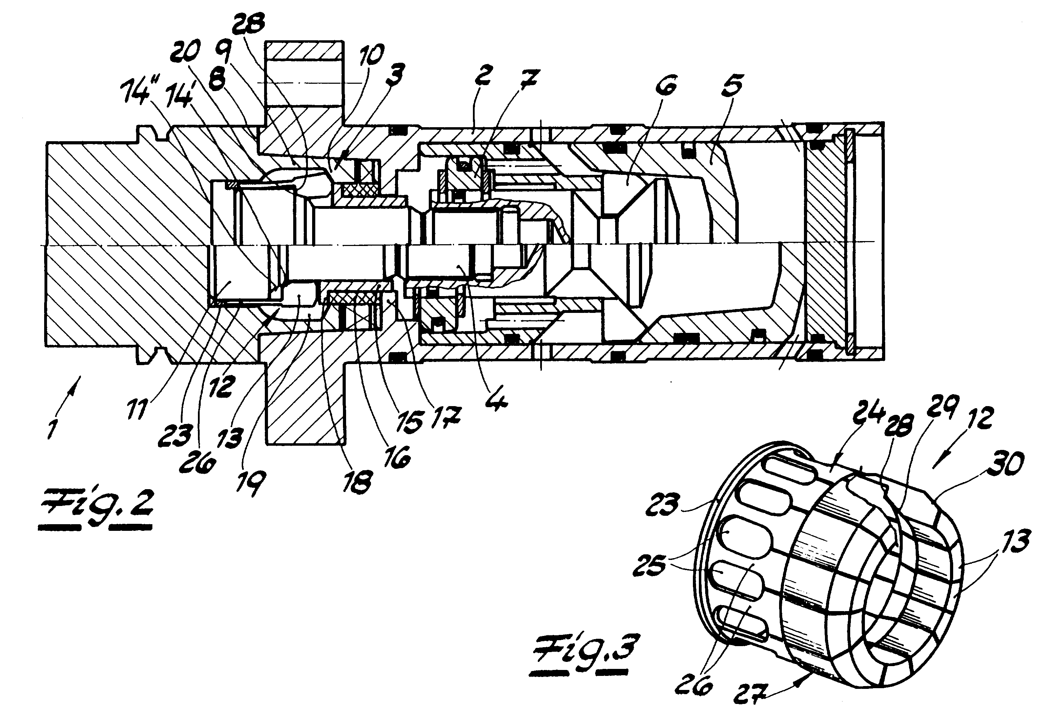

Die obere Hälfte der Fig. 1 und 2 zeigen die Spanneinheit jeweils im gespannten, die untere Hälfte der Figuren die Spanneinheit im ungespannten Zustand.

Zum grundsätzlichen Aufbau der in den Fig. 1 und 2 dargestellten Spanneinheiten gehören ein Werkzeugträger 1, ein Spannschaft 2 einer Werkzeugmaschine und eine Spanneinrichtung 3 mit einem Zugbolzen 4. Die Spanneinrichtung 3 ist im Ausführungsbeispiel und nach bevorzugter Ausführung der Erfindung als hydromechanische Spanneinrichtung ausgebildet und weist einen hydraulisch oder pneumatisch verstellbaren Schieber 5, von diesem beaufschlagte Stellsegmente 6 für die Spannbewegung des Zugbolzens 4 sowie einen hydraulisch oder pneumatisch betätigbaren Ausstoßkolben 7 auf.

Der Werkzeugträger 1 besitzt einen Anschlagbund 8 zur Begrenzung des Spannweges, sowie einen in eine stirnseitige Ausnehmung des Spannschaftes 2 einsetzbaren Hohlschaft 9 mit einem endseitigen, nach innen vorspringenden Kragen 10. Der Zugbolzen 4 weist einen in den Hohlschaft 9 eingreifenden Kopf 11 auf. Am Umfang des Zugbolzens 4 ist ein Sperrelement 12 mit radial beweglichen Sperrsegmenten 13 angeordnet, die an einer kegelstumpfförmigen Führungsfläche 14 des Kopfes 11 anliegen. Bei einer vergleichenden Betrachtung der oberen und unteren Darstellung der Figuren entnimmt man, daß die Sperrsegmente 13 bei einer Spannbewegung des Zugbolzens 4 an der Führungsfläche 14 entlang nach außen gleiten, wobei sie den Kragen 10 des Hohlschaftes 9 hinterfassen und diesen mit dem Zugbolzen 4 verriegeln.

Auf den Zugbolzen 4 ist eine in den Hohlschaft 9 eingreifende Schiebehülse 15 axial beweglich angeordnet. Sie ist mittels einer Druckfeder 16 an einer innenseitigen Ringfläche 17 des Spannschaftes 2 abgestützt. Ein endseitiger Bund 18 der Schiebehülse 15 und der Kopf 11 des Zugbolzens begrenzen einen Ringraum 19, in den die Sperrsegmente 13 radial beweglich angeordnet sind. Den Figuren entnimmt man ferner, daß der Kopf 11 des Zugbolzens eine an die kegelstumpfförmige Führungsfläche 14 anschließende radiale Ringfläche 20 aufweist, die am Ende des Spannweges mit einer radialen Anschlagfläche 21 der Sperrsegmente 13 zusammenwirkt. Sobald die radiale Anschlagfläche 21 der Sperrsegmente 13 an der radialen Ringfläche 20 des Zugbolzenkopfes 11 anliegt, ist die radiale Verstellbewegung der Sperrsegmente 13 beendet.

Bei der in Fig. 1 dargestellten Ausführung besteht das Sperrelement 12 aus frei beweglichen Ringsegmenten 13, die ausschließlich in dem Ringraum 19 geführt sind und lediglich am Umfang durch einen elastischen Ring 22 verbunden sind. Die Ringsegmente 13 sind schmal, so daß der Zugbolzen 4 und damit die Schnittstelle mit kleiner Baulänge ausführbar ist. Die in Fig. 1 dargestellte Spanneinheit ist insbesondere für feststehende Werkzeugträger beispielsweise einer Drehmaschine geeignet.

Die Fig. 2 zeigt eine Spanneinheit für hochtourige Spindeln. Einer vergleichenden Betrachtung der Fig. 2 und 3 entnimmt man, daß das Sperrelement 12 aus einer einstückigen Metallhülse besteht, die einen geschlossenen rückseitigen Ring 23, einen daran anschließenden dünnwandigen Mantelabschnitt 24 mit stegbildenden Durchbrüchen 25 und an die Stege 26 des Mantelabschnittes 24 angeschlossene Sperrsegmente 13 aufweist. Die Sperrsegmente 13 bilden eine von schmalen Einschnitten durchbrochene Ringwulst 27. Der dünnwandige Mantelabschnitt 24 ist auf dem Kopf 11 des Zugbolzens 4 verschiebbar angeordnet, wobei die Sperrsegmente 13 in die von dem Kopf 11 des Zugbolzens 4 und dem Bund 18 der Schiebehülse 15 gebildeten Ringraum 19 einfassen. Durch die Federelastizität der Stege 26 sind die Sperrsegmente 13 radial nach außen verstellbar und auch wieder rückstellbar.

Die Ringwulst 27 weist hülseninnenseitig einen dem Kopf 11 des Zugbolzens 4 zugeordneten Innenbund 28 und eine daran anschließende kegelförmige Ringfläche 29 auf. Die außenseitige Stirnfläche der Ringwulst 27 besitzt eine Fase 30, die mit dem Kragen 10 des Hohlschaftes 9 korrespondiert. Zur Verbesserung der Formsteifigkeit ist der rückseitige Ring 23 der Metallhülse mit einem Verstärkungsrand ausgebildet. Schließlich erkennt man, daß die kegelstumpfförmige Führungsfläche 14 des Zugbolzenkopfes 11 aus einer ersten Ringfläche 14' mit großem Kegelwinkel und einer zweiten Ringfläche 14'' mit kleinem Kegelwinkel besteht, wobei die erste Ringfläche 14' an den die Schiebehülse 15 führenden Zylinderabschnitt des Zugbolzens 4 und die zweite Ringfläche 14'' an die radiale Ringfläche 20 des Kopfes 11 angrenzt.

Als Druckfedern 16 zur Abstützung der Schiebehülse sind metallische Federn sowie Gummifedern einsetzbar.

## Patentansprüche

1. Schnittstelle zwischen einem Werkzeugträger (1) und einem Spannschaft einer Werkzeugmaschine,
wobei der Werkzeugträger einen Anschlagbund (8) zur Begrenzung des Spannweges sowie einen in eine stirnseitige Ausnehmung des Spannschaftes einsetzbaren Hohlschaft (9) mit einem endseitigen, nach innen vorspringenden Kragen (10) aufweist,
wobei der Spannschaft eine Spanneinrichtung mit einem Zugbolzen (4) enthält, der einen in den Hohlschaft eingreifenden Kopf (11) aufweist, und
wobei am Umfang des Zugbolzenz ein Sperrelement (12) mit radial beweglichen Sperrsegmenten (13) angeordnet ist, die an einer kegelstumpfförmigen Führungsfläche (14) des Kopfes anliegen und bei einer Spannbewegung des Zugbolzens an der Führungsfläche entlang nach außen gleiten, wobei sie den Kragen (10) des Bohlschaftes (9) hinterfassen und diesen mit dem Zugbolzen verriegeln,
**dadurch gekennzeichnet**, daß eine in den Hohlschaft (9) eingreifende Schiebehülse (15) axial beweglich auf dem Zugbolzen (4) angeordnet und mittels einer Druckfeder (16) an einer innenseitigen Ringfläche (17) des Spannschaftes (2) abgestützt ist, wobei ein endseitiger Bund (18) der Schiebehülse (15) und der Kopf (11) des Zugbolzens (4) einen Ringraum (19) begrenzen, in dem die Sperrsegmente (13) radial beweglich angeordnet sind, und daß der Kopf (11) des Zugbolzens (4) eine an die kegelstumpfseitige Führungsfläche (14) anschließende radiale Ringfläche (20) aufweist, die am Ende des Spannweges mit einer radialen Anschlagfläche (21) der Sperrsegmente (13) zusammenwirkt.

2. Schnittstelle nach Anspruch 1, dadurch gekennzeichnet, daß das Sperrelement (12) aus frei beweglichen Ringsegmenten (13) besteht, die ausschließlich in dem Ringraum (19) geführt sind und lediglich am Umfang durch einen elastischen Ring (22) verbunden sind.

3. Schnittstelle nach Anspruch 1, dadurch gekennzeichnet, daß das Sperrelement (12) aus einer einstückigen Metallhülse besteht, die einen geschlossenen rückseitigen Ring (23), einen daran anschließenden dünnwandigen Mantelabschnitt (24) mit stegbildenden Durchbrüchen (25) und an die Stege (26) des Mantelabschnitts (24) angeformte Sperrsegmente (13) aufweist, wobei der dünnwandige Mantelabschnitt (24) auf dem Kopf (11) des Zugbolzens (4) verschiebbar angeordnet ist und die Sperrsegmente (13) in die von dem Kopf (11) des Zugbolzens (4) und dem Bund (18) der Schiebehülse (15) gebildeten Ringraum (19) einfassen.

4. Schnittstelle nach Anspruch 3, dadurch gekennzeichnet, daß die Sperrsegmente (13) von schmalen Einschnitten durchbrochene Ringwulst (27) bilden.

5. Schnittstelle nach Anspruch 4, dadurch gekennzeichnet, daß die Ringwulst (27) hülseninnenseitig einen dem Kopf (11) des Zugbolzens (4) zugeordneten Innenbund (28) und eine daran anschließende kegelförmige Ringfläche (29) aufweist und daß die außenseitige Stirnfläche der Ringwulst (27) eine dem Kragen (10) des Hohlschaftes (9) zugeordnete Fase (30) besitzt.

6. Schnittstelle nach einem der Ansprüche 3 bis 5, dadurch gekennzeichnet, daß der rückseitige Ring (23) einen die Formsteifigkeit erhöhenden Verstärkungsrand aufweist.

7. Schnittstelle nach einem der Ansprüche 3 bis 6, dadurch gekennzeichnet, daß die kegelstumpfförmige Führungsfläche (14) des Zugbolzenkopfes (11) aus einer ersten Ringfläche (14') mit großem Kegelwinkel und einer zweiten Ringfläche (14'') mit kleinem Kegelwinkel besteht, wobei die erste Ringfläche (14') an den die Schiebehülse (15) führenden Zylinderabschnitt des Zugbolzens (4) und die zweite Ringfläche (14'') an die radiale Ringfläche (20) des Kopfes (11) angrenzt.

## Claims

1. An interface between a toolholder (1) and a chucking shank of a machine tool,
wherein the toolholder comprises a stop collar (8) for delimiting the chucking travel, as well as a hollow shank (9) which comprises an inwardly protruding collar (10) at its end and which can be inserted in an end face recess of the chucking shank,
wherein the chucking shank contains a chucking device comprising a tie bolt (4) which has a head (11) which fits into the hollow shank, and
wherein a locking element (12) is disposed on the circumference of the tie bolt and comprises radially movable locking segments (13) which are seated against a frusto-conical guide face (14) of the head and which slide outwards along the guide face when there is a chucking movement of the tie bolt, whereupon they fit behind the collar (10) of the hollow shank (9) and lock the latter to the tie bolt,
characterised in that a sliding sleeve (15) which fits into the hollow shank (9) is axially movably disposed on the tie bolt (4) and is supported by means of a pressure spring (16) on an internal ring face (17) of the chucking shank (2), wherein a collar (18) at the end of the sliding sleeve (15), and the head (11) of the tie bolt (4), delimit an annular space (19) in which the locking segments (13) are radially movably disposed, and that the head (11) of the tie bolt (4) comprises a radial ring face (20) which adjoins the frusto-conical guide face (14) and which at the end of the chucking travel cooperates with a radial stop face (21) on the locking segments (13).

2. An interface according to claim 1, characterised in that the locking element (12) consists of freely movable ring segments (13) which are solely guided in the annular space (19) and which are joined merely at their periphery by a resilient ring (22).

3. An interface according to claim 1, characterised in that the locking element (12) consists of a one-piece metal sleeve which comprises a closed ring (23) at the back, a thin-walled shell section (24), which adjoins the closed ring, which comprises web-forming apertures (25) and which comprises locking segments (13) which are integrally formed on the webs (26) of the shell section (24), wherein the thin-walled shell section (24) is displaceably disposed on the head (11) of the tie bolt (4) and the locking segments (13) fit into the annular space (19) formed by the head (11) of the tie bolt (4) and the collar (18) of the sliding sleeve (15).

4. An interface according to claim 3, characterised in that the locking segments (13) form an annular torus (27) interrupted by narrow gaps.

5. An interface according to claim 4, characterised in that on the inside of the sleeve the annular torus (27) comprises an internal shoulder (28) associated with the head (11) of the tie bolt (4) and a conical ring face (29) which adjoins said internal shoulder, and that the outside end face of the annular torus (27) has a chamfer (30) associated with the collar (10) of the hollow shank (9).

6. An interface according to any one of claims 3 to 5, characterised in that the ring (23) at the back has a reinforcing rim which increases the inherent stability.

7. An interface according to any one of claims 3 to 6, characterised in that the frusto-conical guide face (14) of the tie bolt head (11) consists of a first ring face (14') with a large cone angle and of a second ring face (14") with a small cone angle, wherein the first ring face (14') adjoins the cylindrical section of the tie bolt (4) which guides the sliding sleeve (15) and the second ring face (14") adjoins the radial ring face (20) of the head (11).

## Revendications

1. Accouplement entre un porte-outil (1) et une tige de serrage d'une machine-outil,
le porte-outil comportant un épaulement de butée (8) pour limiter la course de serrage ainsi qu'une tige creuse (9) qui peut être insérée dans un évidement frontal de la tige de serrage et qui est munie d'un collet terminal (10) en saillie vers l'intérieur,
la tige de serrage contenant un dispositif de serrage avec un boulon tirant (4) qui comporte une tête (11) pénétrant dans la tige creuse, et
à la périphérie du boulon tirant étant disposé un élément d'arrêt (12) muni de segments d'arrêt mobiles radialement (13) qui sont appliqués contre une surface de guidage tronconique (14) de la tête et, en cas de mouvement de serrage du boulon tirant, glissent le long de la surface de guidage vers l'extérieur en s'engageant alors derrière le collet (10) de la tige creuse (9) et en verrouillant celle-ci au boulon tirant,
caractérisé en ce qu'un fourreau coulissant (15) pénétrant dans la tige creuse (9) est disposé avec une possibilité de déplacement axial sur le boulon tirant (4) et, au moyen d'un ressort de pression (16), prend appui sur une surface annulaire intérieure (17) de la tige de serrage (2), un épaulement terminal (18) du fourreau coulissant (15) et la tête (11) du boulon tirant (4) délimitant un espace annulaire (19) dans lequel les segments d'arrêt (13) sont disposés avec une possibilité de déplacement radial, et en ce que la tête (11) du boulon tirant (4) comporte une surface annulaire radiale (20) qui est raccordée à la surface de guidage tronconique (14) et qui, à la fin de la course de serrage, coopère avec une surface de butée radiale (21) des segments d'arrêt (13).

2. Accouplement selon la revendication 1, caractérisé en ce que l'élément d'arrêt (12) est constitué par des segments annulaires à mouvement libre (13) qui ne sont guidés que dans l'espace annulaire (19) et ne sont reliés qu'en périphérie par un anneau élastique (22).

3. Accouplement selon la revendication 1, caractérisé en ce que l'élément d'arrêt (12) est constitué par un fourreau métallique d'un seul tenant qui comporte un anneau arrière fermé (23), une portion d'enveloppe à paroi mince (24) qui s'y raccorde et est pourvue de découpes (25) formant des barrettes, et des segments d'arrêt (13) surmoulés sur les barrettes (26) de la portion d'enveloppe (24), la portion d'enveloppe à paroi mince (24) étant montée coulissante sur la tête (11) du boulon tirant (4) et les segments d'arrêt (13) s'engageant dans l'espace annulaire (19) formé par la tête (11) du boulon tirant (4) et par l'épaulement (18) du fourreau coulissant (15).

4. Accouplement selon la revendication 3, caractérisé en ce que les segments d'arrêt (13) forment un bourrelet annulaire (27) interrompu par des entailles étroites.

5. Accouplement selon la revendication 4, caractérisé en ce qu'à l'intérieur du fourreau le bourrelet annulaire (27) comporte un épaulement intérieur (28) associé à la tête (11) du boulon tirant (4) et une surface annulaire conique (29) qui s'y raccorde, et en ce que la surface frontale extérieure du bourrelet annulaire (27) possède un chanfrein (30) qui est associé au collet (10) de la tige creuse (9).

6. Accouplement selon l'une des revendications 3 à 5, caractérisé en ce que l'anneau arrière (23) comporte un bord de renfort qui en augmente la rigidité à la déformation.

7. Accouplement selon l'une des revendications 3 à 6, caractérisé en ce que la surface de guidage tronconique (14) de la tête de boulon tirant (11) se compose d'une première surface annulaire (14') à grand angle de cône et d'une deuxième surface annulaire (14") à petit angle de cône, la première surface annulaire (14') étant contiguë à la portion cylindrique du boulon tirant (4) qui guide le fourreau coulissant (15), et la deuxième surface annulaire (14") étant contiguë à la surface annulaire radiale (20) de la tête (11).
